# EUROPEAN PATENT APPLICATION

(11) **EP 4 404 447 A1**
(43) Date of publication of application: **24.07.2024**
(21) Application number: 22865964.5
(22) Date of filing: 09.09.2022
(51) Int. Cl.: H02K 41/025, B65G 23/23

(54) **CONVEYOR BELT DRIVEN BY LINEAR INDUCTION MOTOR WITH A DOUBLE-SIDED PRIMARY AND A LONG SEGMENTED SECONDARY**

(30) Priority: 13.09.2021 BR 102021018108
(71) Applicant: HAKA GROUPS PARTICIPAÇOES DE NEGÓCIOS S/A, 30494310 Belo Horizonte (BR)
(72) Inventor: TRAD, Frederico, 55, APT. 103, VILA DA SERRA 55 NOVA LIMA (BR)
(74) Representative: Pereira Garcia, João Luís
(86) International application number: PCT/BR2022/050362
(87) International publication number: WO 2023/035052

(57) **Abstract**

This invention describes a conveyor belt driven by linear motors distributed along the belt, rather than at the head thereof. These linear electric motors or of the induction type with a short primary having two action sides and a long secondary made of plates of conducting material, such as aluminium or copper. The secondary plates are vertically fixed in the central portion of the rubber belt or metal belts. The invention was developed to simplify the operation and maintenance of conveyor belts, since the present equipments require a very high mechanical tension. Such tension causes rubber stretching, friction between the movable parts, wear of the rolling elements and lack of energy efficiency. The proposal of distributing the linear motors increases the reliability and availability of the equipment since, in the event of failure of any of the motors, operation need not be stopped for maintenance, as the load can be redistributed to the other linear motor units in operation. The invention is used with conveyors having rubber belts, metal conveyors (also known commercially as plate conveyors, pan conveyors or apron feeders), and with vertical conveyors, also known as bucket conveyors or elevators.

## Description

### FIELD OF THE INVENTION

The present invention relates to equipment such as a conveyor belt powered by a linear induction electric motor, to be used in the mining industry for transporting granular loads, in ports for cargo transport, in feeding furnaces in steelmaking, cement industry, quarries, and also in other markets such as agribusiness. This invention also has applications in the fields of mechanical engineering and electrical engineering.

### PRIOR ART

Various types of materials, such as grains, ores, fruits, wood, sand, etc., can be transported by conveyors. These materials have specific characteristics that must be taken into account in the design of the conveyor system, such as density, granularity, and effective angle for transportation.

Conveyors used for transporting granular materials can be of the rubber belt type or the metal conveyor type. This invention applies to rubber belt conveyors, metal conveyors (also commercially known as plate conveyors, shoe conveyors, metal feeders, or *Apron Feeders*)*,* and vertical conveyors called bucket conveyors or bucket elevators.

Conventional belt conveyors are the most economical motorized conveyors and are typically used for transporting products over long distances, at high speeds, or for applications on inclines/declines. This system uses a series of components, gears, bearings, rollers, drums, belt tensioners, and structures to compose the transport mechanism. The belt is supported by a series of rollers along the path and is usually pulled by a motor with a reduction box at its end.

The use of all these components is part of the conventional approach to linear conveyor equipment, and the source of efficiency losses lies in the positioning of the motor assembly, located at the end of the conveyor belt and not distributed along the path, as is the load.

Another observed fact is that, in the case of a failure in the motor assembly of a traditional conveyor, the operation must be reduced or even interrupted, resulting in a significant impact on production.

The stoppage of a conveyor not only affects production but also jeopardizes operational safety since the productive activity consists of a chain of processes. When a process needs to be interrupted, the subsequent chain of activities is affected, mobilizing numerous measures and actions to protect equipment, worker safety and health, environmental protection, and economic factors.

There are strong indications that distributed motorization could contribute to numerous positive factors in an application involving linear conveyors.

The proposed invention allows for simplification of the motor assembly of conveyor belts. Conventional belts, no matter how long, pull the rubber belt along with its load through the drive drum located at one end of the conveyor. This fact leads to the need for belt tensioning mechanisms to maintain traction without slipping and to prevent deflections of the rubber in the sections supported between rollers.

In the case of metal conveyors, conventional motorization is carried out on the drive shaft with the motor and reduction box attached to this shaft. There is a robust metal chain providing traction through gears fixed to the motor shaft. With the proposed invention, motorization becomes distributed along the metal conveyor, eliminating the use of the reduction box and traction by the sprocket, reducing local tensions, and reducing the size of the chain, which now serves only as a guide. The invention, therefore, aims to simplify and reduce the cost of this type of equipment.

Traction loads on rubber conveyors, depending on the equipment, are in the order of hundreds of tons, requiring additional electrical power consumption only to address the problem generated by the positioning of the motors at the end of the conveyor. Furthermore, the mechanical tension added to the equipment increases friction between components, leading to wear and system inefficiencies.

The presented invention consists of a conveyor belt driven by distributed linear motorization along its length in the form of a double-sided linear induction motor. The primary remains stationary and fixed to the conveyor structure, while the secondary moves relative to the primary, pulling the belt and its load.

The secondary is made of blades of conductive material such as aluminum or copper mounted on the belt in the vertical position on its central longitudinal axis on the inner face of the conveyor circuit. We present two options for mounting the secondary blades:
a) Partial overlap in the sequence of the plates to allow for the continuity of the plates as they pass between the two active faces of the double-sided motor and, at the same time, enable the curvature of the conveyor belt and the secondary on the return drums.
b) Trapezoidal geometry of the secondary plates to allow for their accommodation on the return drum during the belt return turn.

### Both options are described in this document.

The use of linear motors makes the conveyor system a more sustainable equipment, as it has less impact on the environment compared to other comparable equipment. Some benefits are mentioned below:
- In the configuration of a conveyor driven by a linear motor, there is no need for a reduction box or gears. Therefore, there is no need for lubrication of these elements that will not exist;
- Linear motors can operate by regenerating energy when the path is downhill and/or when a reduction in the speed of the transported material is required;
- Linear motors may have a lower operating temperature compared to rotary motors, due to the possibility of abandoning the use of casings. This characteristic can improve heat exchange, thus increasing efficiency;
- By reducing the number of mechanical elements, the wear of parts is reduced, reducing maintenance costs; friction losses are eliminated, and the energy consumption of the equipment is improved;
- The mechanical support structure of the conveyor can be incredibly reduced, as well as the counterweight mass, due to the decrease in mechanical tensions on the conveyor. This feature expands the applications of this equipment and reduces manufacturing and operational costs, assembly, and maintenance;
- With the use of multiple linear motors, the occurrence of a failure in one unit does not cause the equipment to stop, as the load from the problematic unit is distributed to the other motors through central control; Linear motors allow for stepped operation with variable load percentages, unlike equipment with rotary motors that tend to binary operation (active or paralyzed);
- It will be possible to monitor the actual speed of the conveyor throughout the path, resulting in better equipment control; The use of rotary motors complicates this monitoring due to the elastic behavior of the conveyor along its length;
- The replacement of a linear motor unit can be performed with the conveyor in motion, as there is no mechanical coupling between the parts;
- Braking can be performed by the linear motors themselves;
- Starts and stops can be smoother due to the distributed traction;
- As the tensioning force should be lower, the effective tension also tends to be much reduced, implying lower mechanical stress on the belt, reducing wear and the risk of rupture;
- The total power of the equipment should be lower to pull the same load as a conveyor driven by a rotary motor. Thus, the power sources for the linear motor-driven conveyor can be smaller and cheaper.

### DESCRIPTION OF THE PRIOR ART

### Prior Art

To develop this invention, a thorough search was conducted in various patent databases, researching the state of the art of equipment: linear motors and conveyor belts that use such technology. The significant advantage of linear motors is that they eliminate the need to convert rotary motion into linear motion. This conversion causes efficiency loss due to the association of various mechanical components prone to failures, wear, and friction. By using linear motion directly, linear motors open a new frontier in engineering and are currently being considered for various equipment that has always been present in everyday life but has traditionally used rotary motion. Numerous patents for linear motors have been registered, both in Brazil through the INPI since 1982, and patents related to linear conveyors using various linear motors at the international level. Each patent was examined to identify any similarities with the application in question, in both open-air and mining-oriented environments, aiming to chart a different path for solving the problem.

In general, it can be asserted that the proposed invention stands out from previous inventions for the following reasons:
- Utilizes a linear induction motor rather than a synchronous motor, direct current motor, or stepper motor;
- Implements a dual-sided linear induction motor configuration, enhancing traction force for the same section of the secondary blade;
- The dual-sided linear induction motor configuration also benefits belt centralization and alignment with the transport direction due to repulsion forces between the active faces of the primary and the blades of the secondary;
- Introduces a metallic secondary fixed vertically to the moving conveyor belt with split rollers and drums;
- Presents two configurations for the secondary motor blade, one with blade overlap and another trapezoidal;
- Incorporates centering guides for the secondary that contribute to the operation, also aligning the conveyor belt.

Regarding the prior art found in the literature, we can mention the following:
1983 I FIPAI: Linear Stepper Motor [PI 8105580-3 A2]: "The present invention relates to a toothed core of soft ferromagnetic material, with smaller or larger spacing about the arrangement of the various surrounding cores along the core, also made of soft ferromagnetic material and each excited using electrical coils. With the progressive excitation of the coils, a stepped magnetic field is formed that acts on the teeth of the core, linearly displacing it due to the phase difference of the core teeth with the U-shaped core." This patent concerns a Progressive Displacement and Variable Speed Linear Stepping Motor. Motor applied to motion control problems.
1985 IJENS: Linear Electric Motor with Fixed Coils for Alternating Current [PI 8302826-9]: "Invention patent of a linear motor comprising two cores with their respective exciting coils directly connected to alternating current, which move a magnetized piston in a constant direction along the axis. In versions suitable for high power, the piston has its magnetization coil which is connected to alternating current by a full wave rectifier bridge; it also has two core segments that complete the magnetic circuit and the mechanical assembly of the same; and it also has two springs fitted inside two cavities in the cores that store the kinetic moment of the piston when the motor is used as a vibrator." This patent is characterized by the description of the construction of a linear electric motor with alternating current with a spring for vibration function.
1985 IUTDC: Primary Element for Linear Induction Motor and Primary Element for Single-Sided Linear Induction Motor [PI 8504327-3]: "The objective of the present invention is to present a primary element of a linear induction motor in which the disadvantages [such as the problem encountered with the use of such motors in the field of transportation with the energy dissipated as heat by the motor and the problems associated with the removal of this heat] are eliminated or attenuated." This patent is characterized by the Cooling Technique of the primary linear motors through the insertion of forced mechanical ventilation.
1989 | DuPont: Useful system for controlling multiple synchronous secondaries of a linear motor with an elongated path - [PI 8707773-6]: "A useful system for controlling multiple secondaries of a linear motor arranged along an elongated path, the system having a linear synchronous motor with its elongated primary arranged along the elongated path and at least one secondary responsive to the primary." This patent is characterized by a long primary linear synchronous motor and multiple short secondaries.
19911 DuPont: Linear Motor Propulsion System - [PI 8907872-1]: "The invention presents a system for propelling individual cars along an endless track, from a first contiguous speed in a car gathering section to a second separated speed in the operational section, and to a third speed in a gathering forming section, where the cars return to the first speed in the gathering. New cars are propelled by a linear motor in which each car has a synchronous secondary and a fixed hysteresis. A first primary positioned adjacent to a part of the track develops electromagnetic waves for engagement with the synchronous secondaries, to provide controlled separation of the cars, and a second primary adjacent to another part of the track develops other electromagnetic waves for engagement with the hysteresis secondaries, to provide controlled contiguity of the cars." This patent is characterized by a Long Primary Synchronous and Hysteresis Linear Motor with multiple short secondaries.
1998 I LG: Magnetic Assembly for Linear Motor - [PI 9605555-3]: "It is a magnetic assembly of a linear motor, which is capable of facilitating assembly and increasing reliability thereof by fixing magnets on a cylindrical magnetic casing to form a magnetic assembly, and which includes a magnetic casing, and a plurality of magnets fixed on a peripheral surface of the magnetic casing." This patent is characterized by a Linear Motor with permanent magnets on the secondary and mounted on a cylindrical casing.
20051 VM: Linear Synchronous Motor with Multiple Time Constant Circuits, a Secondary Synchronous Stator Member and Improved Method for Permanent Magnet Assembly - [PI 0311239-0]: "The present invention relates to a linear synchronous motor comprising a specific main part and a secondary part. The secondary portion is a ferromagnetic backplate. An arrangement of permanent magnets is attached to the backplate, so that a variable or fixed pole pitch occurs in a precise manner between at least two magnets of alternate polarity, which improves existing methods for connecting, guiding, protecting, and enhancing the total flux arrangement produced and emitted by the permanent magnets. A single-piece linear secondary stator member accompanies a main member, the synchronous linear permanent magnet motor. The electrical frequency of the stator is adaptable to allow a wide range of braking applications." This patent is characterized by a Long Induced Linear Synchronous Motor. Also used as an electrodynamic brake for elevators, as well as entertainment transports, such as drop towers, roller coasters, and any other mobile device requiring high-thrust and reliable braking applications.
2006 I Hoganas AB: Stator Core for Linear Motor - [PI 0408267-2]: "The invention relates to a linear motor comprising a stator core and/or a conductor. The stator core of said linear motor comprises an inner perimeter, an outer perimeter essentially surrounding the inner perimeter, a first and a second tooth being arranged along one of the inner perimeter and the outer perimeter, a slot for receiving a stator coil, said slot being a cavity arranged within the stator core, where the stator core is divided into a first stator part and a second stator part, said first stator part including the first tooth, being arranged to partially define the slot, and is made of soft magnetic powder and said second stator part including the second tooth, being made to partially define the slot, and being made of soft magnetic powder." This patent is characterized by a Segmented Tubular Linear Motor divided into rings. The topology may allegedly have numerous (star, oval, etc.) formats for which applications are not informed, nor even glimpsed.
2008 I Beerre: Linear Hydraulic Motor and Alternating Conveyor Belt [PI 0516925-9]: "Represented by an inventive solution composed of a linear hydraulic motor including an elongated cylinder and at least one sliding piston located inside the cylinder. The piston has a longitudinally extended part that loosely fits within the cylinder and describes a path that penetrates an interior zone of the cylinder that extends radially and internally from the opening in the cylinder wall. An internal reinforcing member is located inside the cylinder to move with the piston. The reinforcing member describes a path that also penetrates such an interior zone of the cylinder that extends radially and internally from the opening in the cylinder wall, and the reinforcing member has parts that are concentric and radially aligned with circumferentially spaced parts of the cylinder wall that are on opposite sides of such an opening in the cylinder wall." This patent is characterized by a Hydraulic System with rectilinear movement provided by inherently linear machinery. Topology is not pertinent, wholly or in parts, to the design of a conveyor belt presented in this document.
20101 KKT: Linear Motor [PI 0923573-6]: "The linear motor is configured by including a line of external permanent magnets, configured by arrangement of arched permanent magnets so that they are adjacent to each other, in a manner that the magnetic poles of the permanent magnets are rotated by a maximum of 90° relative to the other permanent magnets, in a cross section including central axes of the permanent magnets, a magnetic field including a line of internal permanent magnets, having magnetization vectors whose radial directional components are directed in the same directions as those of the line of external permanent magnets, and whose axial directional components are directed in directions opposite to those of the line of external permanent magnets, an armature including a molded three-phase coil as a ring, which is supported between the line of external permanent magnets and the line of internal permanent magnets, so as to be movable in an axial direction of the ring, and an excitation device, which causes the armature to generate a predetermined torque. In this way, strong magnetic fluxes can be linked with an armature coil, without the use of an iron core, and the magnetic fluxes of the magnetic field are linked with the entire armature coil." This patent is characterized by a Tubular Linear Motor with arched permanent magnets. Designed to also function as a generator. Should be strongly characterized as an actuator.
2011IGillette: Linear Motor and Method for Operating the Same [PI 0620835-5]: "The present invention relates to the apparatus and associated systems or methods that include a linear machine with an elongated and axially sliding core element (i.e., a shaft). In one embodiment, the shaft includes at least one radial opening to provide communication of a fluid (e.g., air) between an internal volume of a winding tube containing one or more stationary windings, and each end of the shaft, through a lumen extending axially throughout the length of the shaft. The stationary windings are spaced to allow fluid flow through a plurality of radial openings present in the winding tube. In particular, fluid circulation through the windings can provide sufficient cooling to increase the maximum current rating of the machine. Fluid circulation can also provide pneumatic processing capabilities (e.g., vacuum immobilization, blow-off expulsion). In an exemplary embodiment, the apparatus can be used to insert tube-and-square type paper separators into battery enclosures at high speeds." This patent is characterized by a Tubular Motor composed of a stationary winding and a secondary core consisting of permanent magnets. A system that can axially accelerate a mandrel to operate on a workpiece, follow a workpiece, and position the mandrel to operate on it, apply a vacuum pressure to openings present in the mandrel to hold at least one object to be manipulated, and quickly reverse the vacuum to a positive pressure to release said object at a predetermined point in the motion profile.
2013 I Whirlpool: System and Method for Stroke Control and Resonance Frequency Operation of a Linear Resonant Motor - [PI 1103776-8 A2]: "This invention relates to a system and method for stroke control of a resonant linear motor, which has been developed to allow a single magnetic flux variation sensor to simultaneously control the operating amplitude of a movable part coupled to a displacer via a resonant spring, and the operating frequency of the displacer, resulting in a drive that enables the operation of the system at the mechanical resonance frequency of the equipment." This patent is characterized by a Synchronous Linear Motor.
2013 IJLT: Linear Switched Reluctance Motor/Generator - [PI 0717215-0]: "The present invention consists of an electrical machine with linear switched reluctance that can be operated interchangeably as a generator or a motor, with a series of features that allow optimization of the mass-to-power ratio, as well as manufacturing cost. The machine has several air gaps, crossed by a single magnetic flux, in which magnetic force is obtained. This flux is fed by a set of coils placed in the active parts, in which these active parts are two heads in which the magnetic flux closes. There may be other active parts in said magnetic circuit through which the magnetic flux does not close. A set of passive elements, typically the translators, produce, during relative movement to the other part, a variation of the reluctance of the circuit for the position that causes a magnetic force. The most unique characteristic of the present invention is that the magnetic flux only returns through the two outermost active parts, which allows the desired reduction of mass, weight, and cost." This patent is characterized by a linear switched reluctance machine aiming at application in wave energy generation.
20141 Whirlpool: Method for Electrical Drive of Linear Motor - [BR 10 2012 015252-5 A2]: "The invention relates to an innovative method for electrical drive of a linear motor and, in particular, a drive method fundamentally based on the sinusoidal pulse width modulation technique, in which the electrical voltage of the electrical signal comprises at least one segment of a quadratic spectrum wave and the electrical current of the electrical signal comprises at least one segment of a fundamentally sinusoidal spectrum wave." This patent is characterized by a linear motor drive and control especially based on the sinusoidal pulse width modulation technique.
2015 I KKYD: Linear Motor Armature, Linear Motor, and Armature Manufacturing Method - [BR 10 2013 005643-0 A2]: "An armature of a linear motor. The armature includes an armature core with a plurality of teeth arranged linearly and spaced at predetermined intervals and a plurality of coils fitted in adjacent teeth, each of the coils having flange parts, wherein a winding is wound around the coil to form a spiral. At least one of the coil flange parts is formed with a first protrusion and a second protrusion. An overlapping section is formed by the first and second protrusions of two adjacent coils that come into contact or overlap with each other." This patent is characterized by a Synchronous Linear Motor with an unconventional methodology for winding assembly in primary slots. The secondary is formed of permanent magnets.
2015 I LG: Linear Motor Stator Structure - [PI 0105269-1]: "The present invention relates to a stator structure of a linear motor, and more particularly, to the stator structure of a linear motor, which is capable of reducing the number of parts and simplifying the assembly structure." This patent is characterized by a synchronous linear motor primary assembly. In the stator structure of a linear motor, a coil is wound around a bobbin; a plurality of unitary stacked core elements of a predetermined thickness, each of which is formed by stacking a plurality of laminations formed of thin sheets in a predetermined shape, and radially positioned on the outer circumference of the coil; and an injection insulator combining the plurality of stacked unitary coils with an outer circumference of the coil. Consequently, it is possible to reduce the number of parts forming the stator and simplify the stator structure. Therefore, it is possible to reduce the time for assembling the parts and processes for assembling the parts, thus enhancing assembly productivity.
2017ITKE AG: Linear Synchronous Motor; and Use of a Linear Synchronous Motor - [BR 112014013783-8 A2]: "The present invention relates to a linear synchronous motor comprising a long stator, which presents coil windings, and a rotor, which in the longitudinal direction of the linear synchronous motor presents a multiplicity of successive magnets." This patent is characterized by a linear synchronous motor with a short inductor (permanent magnets) and long induced (coil winding) whose intellectual property exclusively reserves its application for magnetic levitation trains.
20191 Hamilton: Linear Motor Translating Assembly, and Electromagnetic Actuator - [BR 102018073495-4 A2]: "This is a linear motor translating assembly for use in an electromagnetic actuator, according to one embodiment. The linear motor translating assembly comprises a cylindrical housing having a first end, a second end opposite the first end, a flange portion at the second end, and a blind hole starting at the second end and extending into the cylindrical housing to a blind hole base; a tubular body located within the blind hole, wherein the tubular body includes a plurality of permanent magnets; and an end cap firmly attached to the flange portion." This patent is characterized by a linear actuator with application in aircraft.
2020IUFRJ: Linear Motor Applied to Magnetic Levitation Transport Vehicles [PI 1103525-0 B1]: "The linear motor of the present invention has a configuration in which the position of the secondary is inverted and it is positioned above the primary connected to the vehicle, causing an attractive force or normal force (Fn) between the primary and secondary, which has the same direction as the magnetic levitation force, thus contributing to the levitation and consequent support of the vehicle. So that the cores of the primary and secondary are frontally exposed, they are mounted on specific supports to allow the manifestation of normal forces in a useful way in supporting the vehicle. The secondary, connected to the permanent way, must have the face of its magnetic core facing downwards, while the primary, connected to the vehicle, must have the face of its core facing upwards. The supports that allow this assembly are in the shape of "C"." This patent is characterized by a linear induction motor with short primary and long ladder-type secondary (nomenclature of its equivalent "squirrel-cage rotor" in rotary motors). Intellectual property protection is focused on harnessing the normal force for vehicle levitation through the mounting of the traction system.
1969 | Herbert Morris Ltd: Drives for conveyors - US3426887A: "This invention relates to improvements in drive units for conveyor belts or chains employing a linear motor of the type comprising two members separated by an air gap, one member being of ferrous metal and the other member being a multiphase AC-energized coil assembly and having a laminated toothed core. The invention comprises a drive unit of the type referred to for a belt or conveyor chain in which a plate or strip over or forming the conveyor acts as the movable ferrous member of the motor and is centered in a horizontal plane during operation, incorporating a pole in the toothed core, together with the coil assembly windings acting as a stationary member of the motor." This patent is characterized by a linear motor system for a conveyor belt. A ferrous material secondary is fixed on the belt in a horizontal position, and the primary with an iron core remains stationary. It differs from the proposed invention in the arrangement of the secondary segments and the type of motor used.
1974 | PT Components Inc: Linear motor conveyor - US3788447A: "A conveyor using a linear motor has an endless guide support in which the linear motor stators are housed. Conveyor segments are articulated in an endless loop for articulated movement, both horizontally and vertically, or both, along the endless path defined by the guide support. The conveyor segments, which have an armature portion extending through slots in the guide support, are retained in the guide support in all orientations of the conveyor by laterally extending portions, including a load support portion. The conveyor is driven along the guide track by the electromagnetic coupling of the linear motor stators with the armature portions of the conveyor segment loop." This patent is characterized by a linear conveyor with articulated secondary for vertical and horizontal curves. Stationary primary. The belt is metallic, and it is the secondary itself that has slots. It does not use a rubber belt, and the plates of the secondary are not attached to the rubber. It also differs from the metallic conveyor mentioned in this invention due to the vertical and perpendicular shape of the secondary about the conveyor belt.
1986 I David: Linear Induction Semiconductor Wafer Transportation - US4624617A: "A semiconductor transportation apparatus includes a carriage for supporting a semiconductor wafer, a track for guiding the carriage, and a linear induction motor for levitating and linearly propelling the carriage along the track. The motor includes a plurality of permanent magnets arranged on the carriage, a plurality of linearly arranged and selectively energizable electromagnets disposed along the track, and circuits for sequentially energizing the electromagnets. Positioning magnets are used to eliminate friction between the carriage and the track, to control the degree of levitation, and to ensure precise lateral positioning of the carriage on the track, and light-emitting diodes are used to detect the position of the carriage on the track." This patent is characterized by a transportation system on a linear guide containing a linear motor for levitation and linear propulsion. It includes magnets installed on the carriages and coils on the guide track.
19891 Toshiba Corp Nippon Shooter Ltd: Conveying Apparatus and Fixing Apparatus - US4817694A: "A transportation apparatus for storage boxes, each containing at least one item of the article to be transported, along a transport path and includes main transport mechanisms and sub-transport mechanisms. The respective main transport mechanism has a pair of guide rails defining a main transport path for storage boxes. Stations are located on the main transport path, and carriers are guided along the guide rails on the main transport path. The carrier includes a storage section for storing the storage cases. The carrier is moved by a linear motor along the main transport path and stopped at exercisable least one station so that the storage box is transported to a destination. The sub-transport mechanism includes a pair of box guides on the sub-transport path extending from the station. The storage box is conveyed by a conveyor belt along the box guides on the secondary transport path. A supply section and a receiving section are provided on the sub-transport path, the supply section supplying the storage box to the conveyor belt, and the receiving section receiving the storage box from the conveyor belt. A transfer mechanism is provided at the station to transfer the storage box between the carrier on the main transport mechanism and the conveyor belt for the sub-transport mechanism." This patent is characterized by a transportation apparatus featuring a flat belt driven by a linear motor for boxes. The secondary extends throughout the path and is proposed for hospital use.
19891 EI Du Pont de Nemours and Co: Method and Apparatus for Controlling the Carriage of a Linear Motor - WO1989012562A1: "This invention relates to a method and apparatus for controlling the movement of the carriage of a linear motor by having a synchronous secondary connected to the carriage interact with adjacent ferromagnetic material in the form of a controlled volume wedge. Background of the invention: Synchronous linear motors generally comprise a carriage with permanent magnets, with the carriage being mounted for movement adjacent to a primary made of ferromagnetic material and which can be electrically energized to also interact with the synchronous secondary or other means of propulsion not associated with the synchronous secondary may be employed." This patent is characterized by the method and apparatus for controlling the travel of a carriage of a synchronous linear motor along the motor's primary, providing a wedge-shaped member adjacent to the entrance or exit of the primary's electromagnetic field.
19921 HUL: Conveyor Belt with Built-in Magnetic-Motor Linear Drive - US5088593A and US5172803: "A conveyor has an endless belt stretched over upstream and downstream rollers and with upper and lower stretches. The belt has an outer surface adapted to carry a load on the upper stretch and an inward-facing lower surface. Permanent magnets are attached to the inner surface of the belt, and a linear motor stator is provided under the upper stretch and juxtaposed with the permanent magnets thereof. The stator and the magnets together form a linear motor for advancing the upper stretch downstream. A matrix of such permanent magnets is embedded in the lower surface of the belt spaced to allow the belt to flex." This patent is characterized by a flat-faced linear conveyor with a bottom crest. Permanent magnets are mounted both inside the belt and on the bottom crest. The proposed invention differs by using magnets both for propulsion and in an attempt to levitate the belt.
2001I Minebea: Conveying System Using Linear Motor - US 6283039 B1: "An inexpensive conveying system using a linear motor allows precise positioning of the stop and controls dust generation. The conveying system has a unit including a passive movable assembly and a plurality of fixed coil sets for performing sending, unpowered movement, receiving, and positioning. The conveying and positioning unit is formed by the passive movable assembly composed of a permanent magnet and a linear sensor scale and a fixed assembly having coils opposite the movable assembly and sending and receiving sensor heads for detecting the position of the linear scale of the movable assembly. To achieve a lower cost, the coils of the fixed assembly are provided only at a sending station and a receiving station, with no additional coil being disposed therebetween." This patent is characterized by a DC linear motor.
2002I Denipro AG: Conveyor System - US6607073B2: "In a transportation system, a row of magnetic elements aligned at least partially parallel to the conveyor path is arranged in a drive region to serve as a stationary drive device. The conveyor elements include movable conductor parts along the conveyor path through the drive region. The row of magnetic elements includes alternately oriented permanent magnets and produces a locally changing magnetic field along the row. The conductor parts are arranged on the conveyor elements so that in the drive region they are positioned in the effective range of the row of magnetic elements. Relative movement between the row of magnetic elements and the conveyor element produces eddy currents in the conductor parts, affecting forces that neutralize the relative movement. The relative movement is produced by annular rows of magnetic elements that are driven by rotation of which a part moves parallel to the conveyor path being in interaction with the conductor parts of the conveyor elements. The drive device operates contactless and allows jerk-free transportation, particularly when used in conjunction with independent mobile conveyor elements." This patent is characterized by a transportation system using magnetic forces driven by a rotating motor that moves a circular piece with magnets. The conveyor contains metal plates that induce from the magnets generating movement forces.
20031 Siemens Healthcare Diagnostics Inc: Bi-Directional Magnetic Sample Rack Conveying System - US6571934B1: "A sample magnetic rack adapted to support liquid containers is propelled along a surface using a magnetic transportation system located below the surface. The magnetic transportation system comprises a plurality of magnet housings driven by a belt, the magnet housings including a magnet slidably contained in an enclosed upper cavity. Magnetic forces emanating from the magnet overcome resistive frictional forces between the sample racks and the operational surface and move the sample racks along the defined input and output tracks on the operational surface. Abrupt movements of the sample racks are eliminated because the magnet of the housing slides smoothly towards the sample rack fixes the sample rack, and pulls the rack along the operational surface as the housings are moved at a constant rate by the belt." This patent is characterized by a method of contactless transportation through magnetic forces from magnets installed on the bottom portion of a track. The magnets are moved by a rack. There is no linear motor.
20031 Joy Global Underground Mining LLC: Mine Conveying System - US6729464B2: "A transportation system for receiving and transporting material from a mobile material conveyor adapted to travel on a floor, the transportation system comprising a main conveyor on the floor and an extension of the main conveyor on the floor and having an upper surface. The extension of the main conveyor comprises a plurality of interconnected structure units and means for supporting an endless conveyor belt in the interconnected structure units. The transportation system further includes an auxiliary conveyor in contact with and movable over at least a portion of the upper surface of the extension of the main conveyor. The auxiliary conveyor comprises a plurality of interconnected structure units identical to the structure units used in the extension of the main conveyor, which means supporting an endless conveyor belt in the interconnected structure units of the auxiliary conveyor, and means for driving the endless conveyor belt." This patent is characterized by a conveyor system via a track through a mobile conveyor adapted to travel on the ground. It is powered by a conventional electric motor.
20031 Bastian Solutions LLC: Induction Drive for Induction Driven Conveyor Including a Virtual Continuous Magnetic Body and Method of Driving Induction Driven Conveyor Including a Virtual Continuous Magnetic Body - US6528908B1: "The invention relates to induction drives for straight or curved conveyors, as well as methods for driving endless conveyor belts. Rotating magnets float freely in supports or are interconnected to create a virtual continuous magnetic body. When the virtual continuous magnetic body encounters the electromagnetic field of the stator, the resulting magnetic flux pushes the continuous magnetic body through the conveyor bed slot. The pivotable magnets are sized so that they do not interconnect because their paths are reversed." This patent is characterized by a conveyor belt drive through a rotating circuit of magnets. The patent seems to attempt to use only magnetic forces to generate movement.
2003 | Siemens: Electric linear motor and secondary for a linear motor - WO2003036781A2: "An electric linear motor with a secondary component, a slide, and a cover, for protecting the secondary component against contamination or damage. According to the invention, the cover is mounted on rollers, allowing it to move so that contaminated regions of the cover can be removed from the surface of the secondary part and cleaned of using a stripping element. This patent is characterized by a linear motor in which the secondary is the stator of this motor and is characterized as a conveyor.
2004Thermo CRS Ltd: Linear Conveyor System - US7093708B2: "A transportation system for moving articles, such as microtiter plates, includes an endless belt with spaced divider ribs to accommodate and position the plates to be moved. The belt is driven by a reversible servo motor. The system comprises removable workstations associated with the belt." This patent is characterized by a belt conveyor system that extends along a predetermined path. The traction is provided by a servo motor (rotary).
2005 | Zhejiang University ZJU: Direct driving type belt conveyor - CN1651325B: "The invention discloses a material transport device driven by a linear motor, comprising a support structure, drums, a conveyor belt, support rollers, a linear motor, and a controller. It states that the primary windings of the linear motor are arranged along the central line of the conveyor belt and are installed in the support structure together with the support rollers. The secondary windings of the linear motor, corresponding to the primary windings, are arranged on the inner surface of the annular conveyor belt. The secondary plates are arranged transversely along the longitudinal direction of the conveyor belt discontinuously in a closed arrangement. The material transport device effectively reduces costs and favors automatic monitoring, control, maintenance, and management. Meanwhile, the device has uniform force distribution and stable operation, which is especially suitable for long-distance material transport operations." This patent is characterized by multiple linear motor units distributed along the conveyor. It differs mainly in the fact that the secondary plates are positioned on the middle line of the conveyor, located in the horizontal plane of the belt surface, and by the type of linear motor used.
2006 Dematic Corp: Belt Conveyor - US7556144B2: "A belt conveyor includes a driven roller and at least one other roller positioned along and between the opposite side walls of the conveyor, and a continuous belt routed around the driven roller and the other roller or rollers. The driven roller is drivable to drive the belt around the rollers to move the articles along the respective zone. The belt has a low modulus characteristic and may be initially stretched by at least 0.75 percent in its longitudinal direction when the belt is wound or passed around the rollers. The driven roller may be directed in response to an article sensor detecting articles on the conveyor belt to transport or accumulate articles on the conveyor belt." This patent is characterized by a flat belt conveyor with side walls that have sensors to detect transported articles.
2006 | Bastian Solutions LLC: Belt including a flexible rare earth magnetic strip and conveyor utilizing a belt including a flexible rare earth magnetic strip - US7597190B2: "The invention relates to straight or curved induction-driven conveyors. Among other things, the present invention relates to conveyor belts having a flexible strip or layer of one or more compositions of rare earth magnets incorporated therein. The belts of the present invention are particularly useful in material handling arts. The strip may extend the entire length of the belt or sections of the flexible permanent magnetic composition may be incorporated into the belt. One or more belt stretch limiting members may be positioned near the flexible magnetic strip. The stators in combination with the flexible strip induce magnetic flux for advancing the conveyor belts." This patent is characterized by straight or curved induction-driven conveyors. The belts of the invention have a flexible strip composed of rare earth magnets. In combination with the flexible strip, the stators induce magnetic flux to advance the conveyor belt.
2009 C&S Competences Et Services: Carousel for storing and transporting, e.g., luggage, in airports - FR2921 054A1: "The carousel has carriers extending along a closed circuit, where adjacent carriers are connected by a connecting part. Guide rollers guide the carriage relative to a structure, and a covering element is integrated into the corresponding carriage. Drive units formed by stators and a movable driving element, that is, a rectangular plate, drive the carriages relative to the structure. The driving element is supported by the corresponding carriage and is made of copper. The stator drives the driving element by induced effect to move the carriages along the closed circuit." This patent is characterized by a conveyor belt system for luggage transportation comprising a structure, a flat linear conveyor belt, and an axial flux linear motor. The stator is a copper plate that is driven by induction.
2010 | Caterpillar Global Mining Hms GmbH: Extraction device, particularly for mining, and method for controlling the extraction device - EP2188197B1: "The invention relates to an extraction device, particularly for mining, comprising two drive stations and a drive chain circulating between the gearwheels thereof. to be able to detect a hanging chain or wear of the chain in a supply chain system in a supply system, or a flat chain in a flat system, magnetic sensor units are provided for detecting at least one chain state of the transmission chain, wherein each sensor device comprises a transmitter formed by a generator of a static or dynamic magnetic field and a detector field provided with a plurality of magnetic field detectors as a detector that is arranged beside a passage for the transmission chain wire to be scanned. The invention further relates to a method for controlling an extraction device to prevent hanging chains." This patent is characterized by a mining device that features a transmission chain and sprockets with magnetic sensors on side panels. The purpose is for the control and tensioning of the belt.
2010 Syntegon Technology GmbH: Apparatus and method for transporting products, having a linear drive mechanism - US8096409B2: "The invention relates to a transport apparatus for conveying products, which includes a linear drive mechanism, a continuous transport system, having two parallel straight conveyor regions and two curved conveyor regions, each connecting one end of the straight conveyor regions and a plurality of conveyor elements. The transport elements extend along the continuous transport system and convey the products to be transported along at least a portion of the transport system while being guided along a guide path. The linear drive mechanism includes a first linear segment and a second linear segment, which are arranged parallel to the straight regions of the conveyor. The curved regions of the conveyor of the transport system are advantageously incorporated as undirected." This patent is characterized by a conveyor belt with magnetic coupling between the internal and external circuits and does not necessarily operate with a linear motor.
2011 | Siemens: Conveyor system comprising an electromagnetic brake - WO2011042487A2: "The invention relates to a transport system comprising a transport device that can be moved along a substantially vertical path and a linear motor comprising a primary part, arranged on said transport device, and a secondary part arranged along the travel path. The primary part has a primary winding and at least one permanent magnet and the secondary part has a profile in the direction of the travel path, comprising grooves and teeth alternately arranged. To increase operational safety, a brake winding is arranged in the secondary part so that it can generate a braking force interacting with the permanent magnet to brake said transport device." This patent is characterized by a transport system for vertical movements driven by a linear motor that comprises a primary part composed of a winding and a magnet and a secondary part arranged along the path with grooves and teeth. It also includes a brake. It differs by using magnets to complete the magnetic circuit.
2012 WRH: Conveying apparatus and support device - US9266679B2: "A mobile conveying device is provided that extends in a flat manner, such as a conveyor belt or a treadmill, to transport individual or bulk products and is mounted on a conveying apparatus. A rotary element including a plurality of rollers is arranged between the conveying device and a support element. The conveying device moves relative to the rotary element, wherein the rollers roll on the conveyor and the support element, and the rollers are interconnected at a distance from each other of using a flexible connecting element." This patent is characterized by a conveyor belt that is driven by a lower roller circuit. These rollers are part of a closed-loop drive assembly. It does not operate with a linear motor.
2013 I BG: Sorting System with Linear Synchronous Motor Drive - US8502422B2: "The present invention relates to a sorting system comprising a conveyor with a plurality of carts for transporting items, particularly for sorting items such as packages and luggage scanners. The conveyor features a linear synchronous motor drive system with stators arranged along a track that the carts follow. Reaction elements are mounted on each of the carts. Each reaction element comprises an even or odd number of permanent magnets arranged on a plate-shaped support. The magnets in reaction elements of adjacent carts are arranged to form a row of alternating polarity magnets, with the said row having two neighboring magnets. At least one of the two neighboring magnets has a reduced dimension in the direction of transportation, and the two neighboring magnets are situated at a transition between adjacent carts." This patent is characterized by a system for classifying or separating objects characterized by transporting articles through a linear conveyor driven by a linear synchronous motor whose stator is distributed along the path. It uses magnets on the conveyor plates.
2014 Syntegon Technology GmbH: Method for operating an electromagnetic transfer system, and transfer system - US9061838B2: "The invention relates to a method for operating an electromagnetic transfer system used to transport items to a downstream conveying device, comprising a preferably closed transport path, wherein there is at least one movable transport element for an item that is moved along a transport surface by said transport element, said transport element having at least one permanent magnet element arranged to be functionally connected to individually energizable inductive coils arranged along the transport path. Position detection means are provided to determine the position of the transport element on said transport path and, in a delivery region, the item is delivered from the transport surface to the downstream conveying device, said conveying device having a separate drive. According to the invention, to reduce the spacing between individual items on the downstream conveying device, the speed of the conveyor of said conveying device is intermittently reduced at the delivery point of the transport surface to the conveying device, relative to the speed of the transport element and/or the speed of the transport element is increased at the delivery point relative to the speed of the conveyor of the conveying device." This patent is characterized by a method of electromagnetic transfer between conveyors. It consists of a magnetic coupling between the carrying conveyor and the load. It does not operate with a linear motor.
2014 Syntegon Technology GmbH: Electromagnetic transfer system - US9079724B2: "The invention relates to an electromagnetic transfer system having a preferably closed transport path, along which a plurality of individually activatable induction coils are arranged and having transport elements, which are movably arranged in the conveyor path and each has a conductor element, which serves to transport in each case at least one article from a first conveying device, along a transport route in the region of the transfer system (100), to a downstream second conveying arrangement, wherein the drive elements are in adjacent contact with the at least one article, at least along the transport route, and wherein the transport element has, as a drive element, at least one permanent magnet element arranged in operative connection with the induction coils. According to the invention, it is provided that the drive element (38) is arranged on the transport element so that it can be moved, in particular articulated, to be placed in abutment contact with, and removed from abutment contact with the at least one article, wherein the drive element is moved by at least one actuation element arranged at a fixed location in the conveyor path." This patent is characterized by an electromagnetic load transfer system on conveyor belts. The induction coils can be individually activated to couple to the desired object. It does not operate with a linear motor.
2014 Yaskawa Electric Corp: Linear motor - US20140203668A1: "In a linear motor, one of a field system and an armature is configured as a mover and the other is configured as a stator. The field system moves relatively concerning the armature. The field system includes two yoke plates that are arranged facing each other, a yoke base to which one side ends of the two yoke plates are to be fixed, a plurality of permanent magnets, respectively, fixed to opposite surfaces of the two yoke plates and arranged along a moving direction of the mover, and an elastic member configured to apply force on the opposite surfaces of the two yoke plates in directions in which the other side ends of the two yoke plates move away from each other." This patent is characterized by a linear motor in which a field system and an armature are configured as a mover and the other configured as a stator, to move relatively.
2014 Laitram LLC: Belt conveyor and electromagnetic drive - US9065310B2: "A belt conveyor having an electromagnetic unit comprising a rotor and a stator sealed in non-magnetic and non-conductive compartments. The rotor is mounted on a drive shaft. A drive drum or drive sprockets supported on the shaft have peripheral drive surfaces engaging a conveyor belt. The rotor is coaxial with the peripheral drive surface - sealed within the drum or sprockets or housed on the axially spaced shaft of the drive surface. The rotor may include conductor rotor bars or permanent magnets. The stator is spaced apart from the rotor by a narrow gap and produces a magnetic flux wave traveling through the gap which causes the rotor and the peripheral drive surface to rotate and drive the conveyor belt." This patent is characterized by a conveyor belt driven by a motor mounted on the drive drum. The outer periphery of this drum is part of the motor.
2015 Beckhoff Automation GmbH and Co KG: Transport device with linear-motor drive - US9555720B2: "The transport device for transporting products has several symmetrically configured movable U-shaped carts, each cart with permanent magnets, also has an endless guide rail to guide the carts and a linear motor device to drive the carts. Each symmetrical half of each cart has three running rollers projecting into the sides of the cart. The three running rollers of the first half rest on the first and second guide surfaces on the first side wall of the guide rail and the three running rollers of the second half rest on the first and second guide surfaces on the second side wall of the guide rail. Each guide surface is arranged at an acute angle to a longitudinal central plane of the transport device, and the two guide surfaces of each side wall are at an angle of 80° to 100° to each other." This patent is characterized by a system of individual car transport on top of a rail. It operates with a linear motor.
2015 Rockwell Automation Technologies Inc Magnemotion Inc: Linear motor transport for packaging and other uses - US9802507B2: "The invention provides, in some aspects, a transport system comprising a guide with a plurality of regions in which one or more vehicles are driven, where each of these vehicles includes a magnet. Arranged along each region are a plurality of propulsion coils, each comprising one or more turns that are arranged around a common axis so that the respective common axes of the plurality of coils in that region are (i) substantially aligned with each other, and (ii) orthogonal to a direction in which the vehicles are to be propelled in that region. The plurality of coils of at least one such region is arranged on opposite sides of the magnets of vehicles being propelled along that region to exert a propulsive force on these magnets. In at least one other region, the plurality of coils arranged on only a single side of the magnets of vehicles being propelled in that region exerts a propulsive force on the same - regardless of whether the plurality of coils in that region is arranged on a single or multiple (e.g., opposite) sides of these magnets." This patent is characterized by a packaging transport system through vehicles containing magnets located above a track with a linear synchronous motor (LSM).
2015 Beckhoff Automation GmbH and Co KG: Stator device for a linear motor and linear transport system - US10181780B2: "A stator device for a linear motor comprises an electrically energizable magnetic field generator for forming a magnetic field, the magnetic field generator comprising a stator tooth and a coil wound around the stator tooth and a retention module for retaining the magnetic field generator, the retention module having a first and a second retention device, wherein the magnetic field generator is arranged between the two retention devices in which a first end of the stator tooth is fixed to the first retention device and a second end of the stator tooth is fixed to the second retention device." This patent is characterized by a guided transport system where the carts have a stator containing permanent magnets and a track that has electromagnetic coils to propel the carts.
2015 ITK Elevator Innovation Center SA: Conveyor system for the transport of passengers/goods - US20150336772A1: "A transportation system for moving passengers/goods formed by a mobile endless belt comprising a plurality of pallet assemblies and drive means for transmitting a drive movement to the pallet belt. The pallets have a functional surface opposite the support surface and have first-gear means. The drive means comprise second gear means designed to interact with the first gear means, so that the drive pallets are driven by the drive means through gearing between the first gear means and the second gear means and to drive said pallet belt in the direction of movement D. The drive means have a linear motor aligned with the direction of movement D." This patent is characterized by a transportation system for passengers/goods featuring a pallet conveyor. These pallets are driven by a linear motor.
2016 BR Industrial Automation GmbH: Method and long stator linear motor for transferring a transport unit at a transfer position - US10622921 B2: "In a long stator linear motor, in order to implement a transfer position in which a transport unit (Tn) is magnetically directed to be redirected from a first transport section (Am) to a second transport section (An) and in order that the forward movement of the transport unit (Tn) remains as unaffected as possible by the transfer, it is provided that at the transfer position (U) on at least one side of the transport unit (Tn), the stator current (iA) of at least one drive coil interacting with an excitation magnet of the transport unit is provided as a current vector with a propulsive force-forming current component (iAq) and a lateral force-forming current component (iAd), and the stator current (iA) generates a propulsive electromagnetic force (FEMV) and/or lateral force electromagnetic force component (FEMS) which is superimposed on the propulsive force (FV) acting on the transport unit (Tn) for the production of a steering effect (L)." This patent is characterized by a method of transfer between two transport units using cars on long-stator linear motors.
2016 Yamaha: Linear conveyor - TWI 555689 B: "The present invention relates to a linear conveyor using a linear motor as a driving source. The linear conveyor has a case where the transport path required by each user (linear or annular) or the length of the transport path is different, and there is a case where the transport path needs to be changed later or the length of the transport path is changed. To easily handle such demand, it is considered to unify the linear conveyor. That is, a sensor including the base, track, electromagnet, and linear scale mentioned above is built. Unit component. In addition, it is more reasonable to connect a plurality of unit members to form a linear conveyor and provide a motor control device for each unit member and individually control the supply of current to the electromagnets of the unit members." This patent is characterized by a transfer method using a linear motor with multiple short primaries for items that can follow different paths.
2017 Krones AG: Method and device for transporting containers or container assemblies - EP2511203B1: "The present invention relates to a method and a device for transporting containers or container assemblies. These transportation devices and methods are well-known from the prior art. They serve, for example, to transport containers or groups of containers from a processing device, such as a filling device, to another processing device, such as a labeling machine or a capper. Typically, the containers or groups of containers are intermittently transported." This patent is characterized by a method for transporting containers, objects, or bottles with independent movement through a pre-defined path guide equipped with a linear motor.
2018 Prodrive: L/M-driven roller transfer apparatus - US10287111B2: "An activated roller transfer apparatus for transferring articles between one conveyor and another. The roller transfer apparatus comprises a linear induction motor stator as a primary and electrically conductive article support rollers as a secondary. The stator of the linear motor generates a traveling magnetic flux wave that induces eddy currents in the rollers. The eddy currents produce magnetic fields that interact with the flux wave to produce forces that rotate the rollers to propel the articles through a gap between the ends of the two conveyors. The stator is generally trapezoidal to conform to the shape of the gap." This patent is characterized by an article transfer apparatus through conveyor rollers. A linear induction motor is used to induce the rotary motion of the rollers.
2018 QDJ: The linear electric motors running protection device of halved belt induction system, [CN207107705U]: "If the utility model relates to a type of linear electric motor operating with a protection device of the split-belt induction system, including the drive mechanism and the track structure mechanism which is placed on the left and right sides of the drive mechanism. The drive mechanism includes a base, it is placed in the drive block set above the base before and after two, and the gap for the insertion of the drive friction plate to hold the split belt induction system is provided between two drive blocks; The track structure mechanism includes substrate, track structure, connecting plate is respectively equipped with above the track structure on both sides, two sets of bearings arranged laterally in the front and rear position are provided with connecting plate above, the bearing set includes two pedestals to be connected with the connecting plate and positioned laterally, two pedestals are front and rear to be adjusted, pedestal upper surface is respectively equipped with several rollers, and the roller in two bearing sets is corresponding, in turn, to the gap for the insertion of the drive friction plate to hold the split belt induction system is provided between the roller for adjustment and being correspondingly arranged. The utility model, which prevents the transport sheet of the split-belt induction system from causing damage to the linear electric motors, ensures the advantages of the split-belt induction system operating steadily." This patent is characterized by a protection device in the system of the linear motor arranged vertically about the transported load.
2018 M HIMS: Transportation method and transportation device - JP2018184294A: "PROBLEM TO BE SOLVED: To provide a transportation method and a transportation device capable of constructing a transportation system, such as a manufacturing line or the like, based on synchronizing an article and a transport piece or the like and achieving constant step indexing through a linear motor type transportation mechanism. Solution: A transportation method using a linear motor-type transportation mechanism having a plurality of movable elements and a transport path comprises: a step for acquiring information, for a transported article from a transportation mechanism, to indicate that a specified portion of the article has reached at least two positions, respectively, arranged in a range of sizes in the transport direction of the article from the vicinity of a delivery point on the transport path to the location in front of the delivery point; a step for moving the movable element to be synchronized with the article that reached the delivery point after the information has been acquired based on the information; and a step in which the movable element receives the article that reached the delivery point." This patent is characterized by a transportation method using a linear motor-type transportation mechanism having a plurality of motors capable of transporting an article and a transport path on which the plurality of motors moves individually.
2018 Ji'nan Shang Hai Fluid Contrai Equipment Co Ltd: A kind of magnetomotive conduit traffic transport device - CN207725399U: "The utility model relates to a type of magnetomotive conduit traffic transport device, including a pipeline and the magnetic power vehicle arranged in the pipeline, several platforms are arranged at intervals in the pipeline, several magnetic force drive drives are provided on the bottom of the pipeline and the platform, the bottom of the magnetic power vehicle is provided with at least one front permanent magnet, the magnetic force drive Contrail provides energy with the coordinated operation of the forward permanent magnet for the magnetic power vehicle and the driving of the magnetic power vehicle is carried out in the pipeline. The utility model achieves magnetic power vehicle starting by magnetic drive, advancing, turning, and stopping and changes the conventional traffic transportation means, has the advantages of clean energy source, environmentally friendly and pollution-free, low consumption, and high energy. The magnetic power vehicle runs in a closed conduit, without wind, although it is not influenced by the climatic environment, it can provide continuous service, while the whole service process safety is reliable, and safety and stability are greatly improved compared with the traditional transportation mode. The pipeline can be erected on the ground, in the air, on the ground, or the seabed, and not limited by space, the application scenarios are extensive." This patent is characterized by a utility model describing a means of transporting people in a vehicle propelled by magnetic forces that operates within a tunnel. Its movement is through the rolling of a magnetic track relative to the track.
2018 WNZR: A kind of linear motor and halved belt sorter [CN207932546U]: "The utility model provides a kind of linear motor and halved belt sorter, which is related to the logistics transportation area. A kind of linear motor, for the transportation of objects. It includes the motor body and the guide assembly being connected. The motor body is equipped with the extended delivery ramp along the predetermined direction and the guide assembly serves to guide the object to be transported to enter the delivery ramp. After the object enters the delivery ramp, the motor body will cause the object to move along the delivery ramp, until the object exits the ramp. Since the guide assembly can be passed before the object enters the delivery ramp, if the object is present in the misalignment position delivery ramp, the guide assembly will perform position correction for the object, the object is set to be directed in the delivery ramp, to make the object smoothly enter the delivery ramp, the case where avoiding the collision of the object and the motor body, none of the objects can be introduced in the delivery ramp, substantially increases the transfer efficiency of the object, avoiding premature breakage of the object and the motor body. The utility model also provides a kind of halved belt sorter, including linear motor." This patent is characterized by a linear motor with a tubular guiding that positions and provides the direction of movement.
2019 LLC: Tray conveyor driven by brushless DC motor - US 10994953: "A conveyor for transporting articles supported on trays with independent and controllable feeding. Each tray comprises a suspended blade from an article support platform. A series of drive coils are embedded in the blade. A battery and a controller embedded in the tray drive the drive coils. The blade passes through a slot between two conveyor rails supporting the tray platform. The slot is bounded by a series of permanent magnets along each rail. The drive coils produce an electromagnetic field that interacts with the permanent magnet field in the slot to form a brushless DC motor that drives the tray along the rails." This patent is characterized by a brushless DC linear motor with a long inductor.
2019 M Krones AG: Transport device and method for adapting a transport - EP3521219B1: "The present invention relates to a transport device and a method for adapting a transport device according to the features of the independent claims. In the packaging industry, in particular, different individual products are transported from one processing machine to the next. The transport devices used for this purpose must be partially adapted to the goods to be transported to ensure safe transportation. In particular, when transporting individual goods, it may be necessary to ensure a certain arrangement and/or orientation of the individual goods within the transport device. For this purpose, special guides and/or retaining structures are typically provided in the transport devices, which fix the products in place in the desired arrangement and/or orientation during movement through the transport device. In the case of a product change, depending on the type and size of the new product, it may be necessary to adapt the guide and/or support structures to the new product. This can be done, for example, by adjusting the structures of the side guides. The support structures, on the other hand, are usually provided in the form of shaped parts that need to be replaced manually or automatically when a product is changed." This patent is characterized by a transport device for piece goods with at least one first guide rail, wherein the transport device comprises a linear motor drive system. Coils are located on the guide rail, and the cars have magnets.
2020 Anhui University of Science and Technology: Transport device and method for adapting a transport device - CN112141628A: "The invention relates to a conveyor belt device driven by a linear motor of a circulating line, which consists of a conveyor belt, a linear motor of a circulating line, a rotating alignment conveyor roller, a return conveyor roller, and a roller. The linear motor of the circulating line and the roller are concentric shafts; the linear motor of the circulating line body and the conveyor belt move simultaneously; in the transportation process, the rotating alignment conveyor roller has the function of preventing deviation; the primary stage of the linear motor with the circulating line body also has the function of preventing deviations; the brake has the characteristics of small energy consumption, simple structure, convenience in maintenance, high braking speed, and so on." This patent is characterized by a continuous linear motor along the conveyor belt with the secondary fixed to the belt. The Primary is fixed to the "circulating" body.
2020 Chengde: Conveying mechanical equipment - CN211254220U: "The utility model discloses a piece of conveying machinery equipment, specifically related to the technical field of mechanical equipment, including frame and clearance module, the frame below is located in the clearance module, the clearance module is including fixed frame and clearance box, the bottom of the fixed frame positioning clearance box, the inner fixed air collecting cover which is equipped with a fixed structure, the inner sliding rail fixed with an air collecting cover, the upper end of the sliding rail sliding is equipped with the slide, slide one side is equipped with a linear electric motor, the fixed base which is equipped with sliding upper end, the fixed motor which is equipped with the second at the upper end of the base, the second with the fixed carousel equipped with motor outlet. The utility model discloses that it is wide to clean up sight, can achieve better cleaning effect, not only avoids the trouble of artificial dredging, also ensures the normal function of this conveying machine to also be able to collect flour during cleaning, can realize the recycling, avoids the waste of resources, a reasonable design has a good practicability." This patent is characterized by a Utility model of a conveyor machine for a factory environment in the transfer of flour. Containing cleaners and a small linear motor to drive the belt.
2020 Jiangxi: High-speed linear transportation type feeder for corrugated filler production - CN210649737U: "The utility model discloses a high-speed linear transportation type feeder for corrugated filler production, which relates to the technical field of feeders and comprises a conveying structure, two vertical posts, and a retainer, wherein the two vertical posts are symmetrically arranged at the end part of the conveying structure, and the retainer is arranged on one side of the conveying structure; the conveying structure is composed of a protective grid and a movable structure, the movable structure is provided with a moving mechanism, the movable structure is fixedly connected to one side of the protective grid and is also connected to the vertical post, the movable structure comprises two racks and two guide rails that are arranged in parallel, and the guide rails are fixedly connected to the inner sides of the guide rails; the spacing sub-assembly and the pressing mechanism are respectively installed on one side and the bottom of the movement, and the use of scheduling is carried out for the accessible external automatic control system, replaced the means of artificial blowing simultaneously, improved the operation safety, can use with the cooperation of other processing equipment and form the production line, greatly improved the machining efficiency, realizes the synchronous coordination." This patent is characterized by a Utility model of a linear transportation type with feeder cars, guide rails, and structures. It is powered by an electric motor and transmission belts.
2020 KONE: Electric linear motor [US 2020/0325003]: "The invention relates to an electric linear motor comprising a longitudinal stator beam; at least one motor adapted to move along the stator beam; wherein the stator beam comprises at least two lateral faces located on opposite sides of the stator beam, each of the lateral faces carrying ferromagnetic poles spaced by a pitch, and wherein the motor comprises at least two counterfaces facing the respective lateral faces of the stator beam, wherein the at least two lateral faces, as well as the at least two counterfaces facing the respective lateral faces, are inclined or offset relative to each other." This patent is characterized by the Design of a synchronous linear motor with a double-sided armature and long inductor composed of permanent magnets. And a proposed driving and control. Traction motor developed for application in passenger or cargo elevators.
2020 TFR: Linear electric motor alternately sorts machine - CN211563717U: "The utility model discloses an electric linear motor alternately sorting machine, including the structure, both ends distribute a linear orbit on the structure and both ends distribute a circular arc track on the structure, and the linear orbit and connection of circular arc track become round and the uniformly distributed delivery track has a round sorting cart on the delivery tracking, and the sorting cart moves along the delivery track. The linear motor cross-sorting machine is driven by a linear motor, a secondary plate of the linear motor at the bottom of a circular articulated sorting cart passes above the secondary plate of the linear motor in sequence, the sorting cart is continuously driven by the linear motor to move along the circumference, and the sorting cart loads and unloads cargoes in the process of movement, so that the sorting cart is extremely fast; the linear motor drives the sorting cart to transmit through the mobile wheel so that the noise is low; compared with a sorting machine driven by a linear motor or a rotary motor combined with a chain wheel and a belt wheel, the structure is simple and reasonable and the cost is low; the belt cart is driven by the electric brush in a conductive mode, other messy connection wires are avoided, and the structural distribution is clean and reasonable." This patent is characterized by a conveyor for transporting lightweight and low-volume materials, preferably applied for sorting letters. A system consisting of a linear motor with a short primary and secondary on horizontal flat plates.
2021 IGJT: Novel linear motor - CN212572347U: "The utility model relates to a field that is transported in production and, more specifically, relates to a new linear electric motor. The applicant provides a linear motor, the bottom of a main body of the motor is provided with a supporting plate that communicates with heat dissipation holes at the bottom of the main body of the motor, so that the motor heat can be dissipated through hollow plates that are arranged in parallel, the heat dissipation efficiency is improved, damage to the motor caused by poor local heat dissipation capacity is avoided, and by arranging the hollow plate structure, the heat dissipation area is enlarged, the weight increase of the linear motor is reduced, and the stability of the linear motor is facilitated; the applicant provides a linear motor that can be used for high-power motors and transportation, reasonably designing the capacity and size of the main body of a motor; furthermore, in order to further reduce the size, the applicant also sets the circuit board in a concave shape and places the motor in the concave position, so that the size is reduced, the imbalance of the center of gravity is avoided, and the stability of the linear motor is improved." This patent is characterized by the Design of a heat dissipation system aimed at reducing the size of the linear motor in the function of the increased efficiency obtained with its better cooling.

### BRIEF DESCRIPTION OF THE FIGURES

The entire system can be better understood through the following detailed description, in line with the attached figures, where:

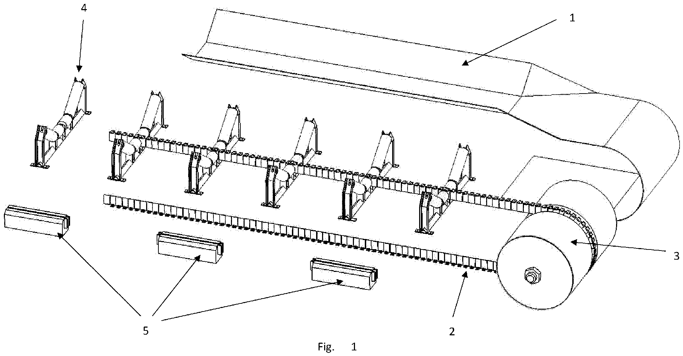

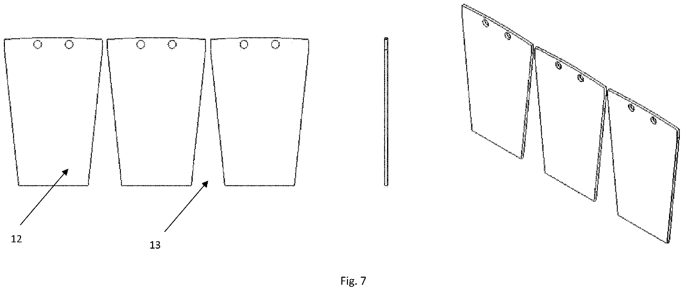

**FIGURE 1** shows a partially exploded view of the transportation system in which it is possible to observe **(1)** the rubber belt, **(2)** the secondary plates of the motor, **(3)** the return drum at one end of the conveyor, **(4)** the roller support structure of the conveyor belt, **(5)** the representation of the primary units of the linear motor distributed along the length of the conveyor. This figure illustrates only one end of the equipment; the other end of the conveyor is symmetrical and can be seen in Figure 7.

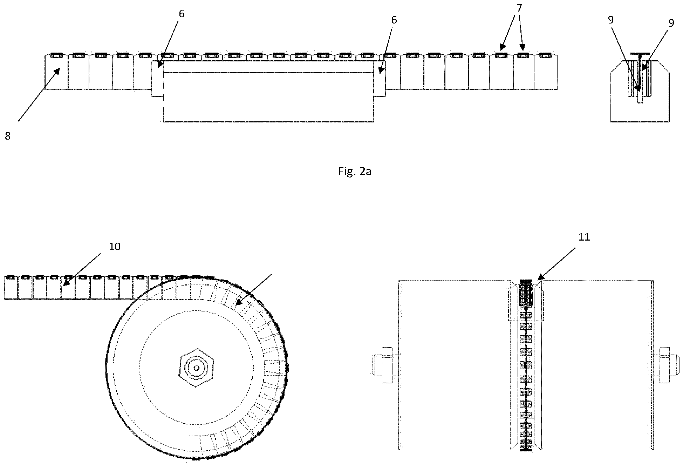

**FIGURE 2** illustrates a side view of the linear motor displaying: **(6)** the centralizing devices of the secondary plates, **(7)** the plate fixations, **(8)** the overlapping type secondary plates, **(9)** the lateral free space between the active faces of the primary and the secondary plates, commonly referred to as the air gap.

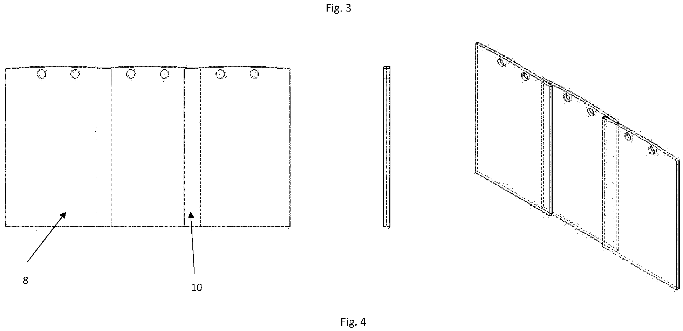

**FIGURE 3** shows the arrangement of the sectioned secondary plates, of the overlapping plate type, in the curved section on the return drum in a side view, where: **(10)** is the overlap section of plates both in the straight and in the curved return, **(11)** is the groove on the return drum to allow the accommodation and operation of the secondary plates during the return curve.
**FIGURE 4** shows the detail of the plates of the secondary version with overlapping plates **(8).**
**FIGURE 5** represents a side view of the second geometry of secondary plates that can be used in this belt conveyor. The geometry of this plate (12) is trapezoidal to allow accommodation in the return curvature performed on the return drum. The fixations **(7)** are the same as the overlapping plates illustrated in Figure 2; the free space continues to be present at **(9).**

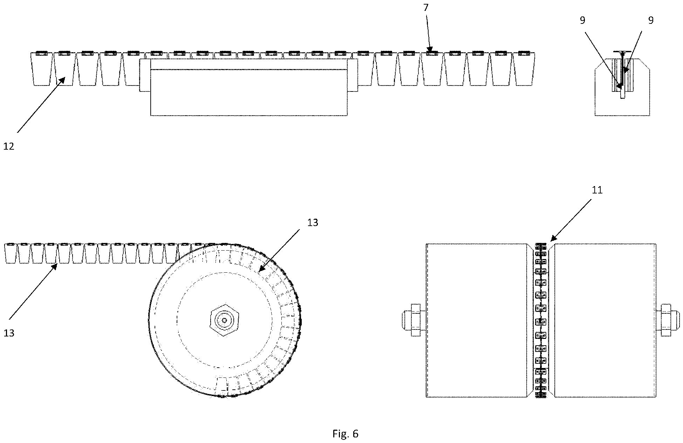

**FIGURE 6** shows the side view of the curved section for the trapezoidal geometry of the secondary plates where **(13)** is the gap between plates formed by successive trapezoidal geometries. In the curve **(13)** is also the gap, so that the lateral edges of the trapezoidal plates become parallel. **(11)** is the groove on the return drum to allow the accommodation of the secondary plates.
**FIGURE 7** shows the detail of the version of the secondary with trapezoidal plates **(12).**

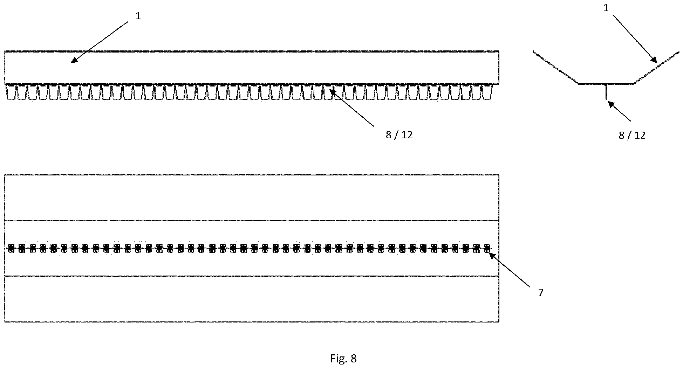

**FIGURE 8** illustrates the conveyor belt **(1)** with the sectioned secondary plates **(8 or 12)** fixed vertically facing the underside of the belt as a "keel."

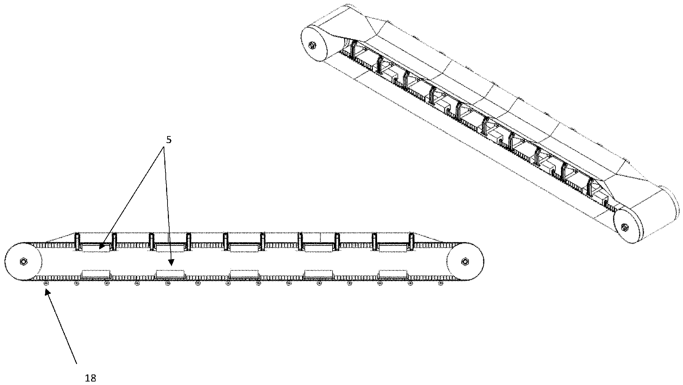

**FIGURE 9** shows an overall view of the conveyor with the complete transport loop for a better understanding of the system. This figure shows the arrangement of several primary units of the motor installed on the upper and lower branches of the transport belt.

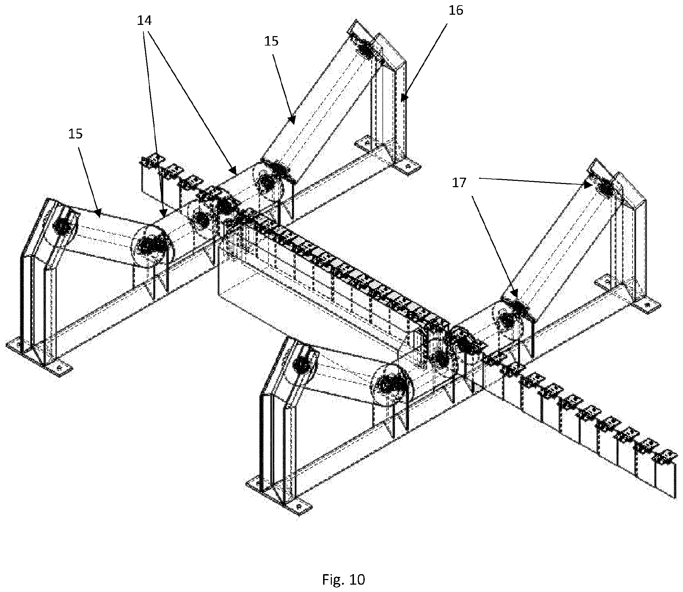

**FIGURE 10** represents the roller support structure, where: **(14)** is the split central roller, **(15)** is the inclined side rollers, **(16)** is the roller support structure in structural steel, and **(17)** is the roller bearings.

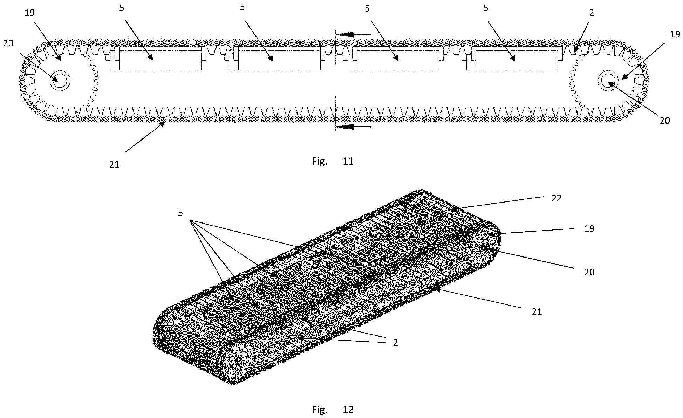

**FIGURE 11** shows another type of linear conveyor, in a side view called a metallic conveyor/feeder, which is driven by the double-sided linear motor **(5)** as in Figure 1. Where it is also possible to observe: **(2)** the secondary of the linear motor, **(19)** the sprocket wheel guiding the link chain **(21),** the head shafts **(20)** that are coupled to the sprocket wheels and rotate with the movement of the conveyor.
**FIGURE 12** shows another view of this metallic feeder (apron feeder) where it is possible to observe that several sets of linear motors **(5)(2)** can be installed in parallel, in the available space within the transport loop formed by the metal belt **(22).**

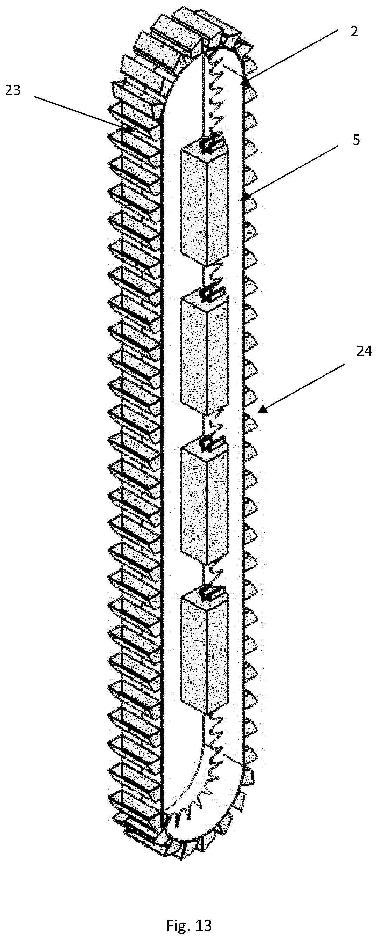

**FIGURE 13** shows another type of linear conveyor that uses distributed motorization. In this configuration, the conveyor operates in the vertical position and is called a bucket conveyor. In this illustration, the vertical segment of the bucket elevator is shown, where **(23)** is the loading compartment called a bucket, **(2)** the secondary of the motor positioned inside the transport loop formed by the flat rubber belt **(24),** and the primary units of the linear motor **(5).**

### DESCRIPTION OF THE INVENTION

The distribution of the load of the material transported on conveyors naturally leads to distributed propulsion, especially in long conveyors.

Linear motors, therefore, offer greater control over the transported load, eliminating operational inefficiencies when compared to conventional concentrated propulsion at the head of the conveyor.

Referring to these figures, it is possible to observe, in **FIG. 1** **and FIG. 9b**, the general arrangement of the main equipment that composes the conveyor belt, in this version, with distributed traction along its length through various units of primary **(5)** linear motors that are summed up to reach the power required to perform the work on this conveyor.

In the linear motor used, the primary (5) of the induction electric motor remains static and integral to the conveyor structure, while the secondary **(2)** of the motor moves relative to this primary (5).

The primary part is the active equipment that receives electrical power to activate its windings. The motor used is of the active dual-sided type where these sides correspond to two sets of iron cores and various windings that are positioned against each other, forming a central gap through which the secondary plates (2) must pass for induced current generation.

Electromagnetic forces are generated by the primary (5) through the control of electric current and frequency in the windings of its coils. Control and drive are performed by frequency inverters.

The generated force is transmitted without contact from the primary to the secondary plates, maintaining a distance between the faces of both called the "air gap."

The segmented plate secondary (8; 12) is guided in the gap by the electromagnetic forces generated in the primary (5) and thus pulls the belt (1) that is free to translate supported on rollers **(14, 15, and 18)** and drums **(3).**

The load of material to be transported is deposited in a distributed manner on the upper surface of the belt (1) and is carried by the movement generated in the linear motor.

The linear motor also serves to center the belt on top of the conveyor roller structure. Sometimes, granular loads may be deposited asymmetrically on the belt, and conventional conveyors, this leads to misalignment between the belt and the rollers and drums. With the linear motor, this issue tends to be reduced due to the presence of guide elements **(6)** and the fact that the force applied to the secondary has a restoring property of central positioning. If any plate is closer to one of the faces of the primary, it should experience a repulsive force, bringing it toward the middle of the gap formed by the faces of the primary.

The belt **(1),** usually made of rubber for applications in granular transport, remains supported on top of load rollers (14; 15, and 18) and performs a closed cycle, looping around return drums **(3).**

In **Figure 2****,** the version of the linear motor with overlapping plates is depicted. The plates **(8),** made of conductive material such as aluminum or copper, form a continuous train with some overlap **(10).** This overlapping of the plate faces **(****Fig. 4****)** allows the continuity of the secondary, enabling the full utilization of the plate area that passes through the middle of the internal faces of the primary motor. This fact also allows the continuous secondary to follow the curvature of the return drums. These drums must have a compatible diameter for the dimensions of the plates to avoid jamming due to deformation generated by the contact between the plates during pivoting on the curved surface of this drum.

Devices called centralizing guides **(6)** must be installed at the ends of the primary of the motor. They can be of the sliding or rolling type and have the role of guiding the plates to the central position between the active faces of the linear motor primary. Thus, an equidistant air gap is maintained between the faces and the motor plates. This positioning is important to prevent contact and consequent damage to both parts of the motor. Additionally, the air gap establishes a direct connection with the efficiency and torque of the motor.

In **Figure 2****,** the fixings **(7)** of the plates on the rubber conveyor belt can also be observed. These parts are attached to the secondary plates and are screwed or riveted into the rubber of the belt to allow for working traction.

The return drum can be seen in **Figure 3****,** as well as its equatorial groove **(11)** that permeates the entire cylindrical surface and allows for the accommodation of the motor's secondary plates during the return curve of the belt cycle.

**Figure 5** reveals the second type of segmented secondary, the type of **plates with trapezoidal geometry (12).** These plates of electrically conductive material are mounted on the rubber conveyor belt in a train-like vertical position one after the other so that there is no overlap of plates in this version of the secondary. This fact allows for a shorter distance between the faces of the linear motor primary but causes some efficiency loss due to the existence of empty spaces **(13)** between one plate and its successor. These details can be better visualized in **Figure 7****.**

**Figure 8** shows a view of the rubber belt with the secondary plates installed on its lower portion. The fixation should be done either temporarily through screws or rivets attaching the fixator **(7)** to the rubber **(1)** or permanently through vulcanization or some adhesive. The possibility of removing the plates is important from a maintenance standpoint, and the possibility of permanent fixation is interesting from an operational safety standpoint. These measures should be considered by the engineers.

**Figure 9** shows a global view of the rubber conveyor belt used for transporting granular materials from mining equipped with distributed linear motorization.

**Figure 10** shows the most important parts of the linear motor-driven conveyor equipment, where both a primary motor unit **(5)** and a section of the secondary **(2)** can be seen, as well as the metallic support structure for rollers **(16),** its central load rollers **(14),** and the lateral ones **(15).** These load rollers support the weight of the transported load above the rubber belt. In this equipment, the load rollers need to be bipartite to allow the passage of the secondary blades in the central branch between rollers. The distance between these central rollers must be minimal to allow the passage of the plates without compromising the load support by the rubber belt.

**Figure 11** illustrates a side view of the drive system of a metal feeder/conveyor, the only peculiarity of this equipment being that instead of a rubber belt, metal plates are closing the transport loop circuit. These metal plates **(22)** carry the volume of granular material from mining, with their ends fixed to the side link chain **(21).** The chain operates on both sides of the metal conveyor and engages with the return sprockets.

In conventional metal conveyors, traction is achieved through a motor gearbox assembly coupled to the shaft of the return sprockets **(20).** This invention proposes that this equipment use the same linear motor mentioned in the previous figures like **FIG. 2** **and FIG 5** and no longer use a motor gearbox assembly at its end.

**Figure 12** shows an isometric view, where 3 sets of linear motors aligned parallel to the longitudinal axis of the equipment are visualized. Since this metal feeder operates with very high workloads and has a greater width, it allows for distributed motorization both in its length and width.

**Figure 13** illustrates a vertical conveyor or bucket elevator as it is commercially called. The peculiarity of this equipment is to operate in the vertical position and have "buckets" **(23)** made of rubber fixed on the external surface of the transport loop, which serve to lift the load from one level to another, being filled with granular material. This invention also proposes distributed motorization in this type of equipment, dispensing with the rotary motorization installed in the head drum. The situation of this equipment is quite similar to that of Figure 1 with the difference that in the bucket elevator, the rubber belt is flat **(24)** and oriented vertically. In this conveyor, the central rollers and the return drums must also have grooves or be bipartite to allow the passage of the secondary blades.

All the described equipment: horizontal rubber belt conveyor, metal feeder, and bucket elevator can operate with both types of secondary: overlapping plate type **(8)** and trapezoidal plate type **(12).**

## Claims

1. "CONVEYOR BELT DRIVED BY LINEAR INDUCTION MOTOR WITH DOUBLE-SIDED PRIMARY AND LONG-SECTIONED SECONDARY" **characterized by** a conveyor belt that operates in the transport of granulated articles from mining or not, transported on a rubber belt (01) using motor propulsion equipment linear induction electric with active double sided primary (5) with long and sectioned secondary of the type of overlapping plates (8) or trapezoidal plates (12) installed in the central and internal portion of the belt transport loop, being able to operate in horizontal paths , inclined or vertical, with horizontal and vertical curves, and with rubber or metal straps.

2. "CONVEYOR BELT DRIVED BY LINEAR INDUCTION MOTOR WITH DOUBLE-SIDED PRIMARY AND LONG-SECTIONED SECONDARY" according to claim 1, **characterized by** an association of linear motor primary units connected to meet the nominal power capacity required to transport the load as in figure 9, in the loading and/or return branch.

3. "CONVEYOR BELT DRIVED BY LINEAR INDUCTION MOTOR WITH DOUBLE-SIDED PRIMARY AND LONG-SECTIONED SECONDARY" according to claim 1, **characterized by** a conveyor belt driven by a linear motor with a short primary and long secondary and sectioned with conductive plates (aluminum, copper, alloys) in the format of (8) flat plate with overlap or (12) flat plate with trapezoidal geometry.

4. " CONVEYOR BELT DRIVED BY LINEAR INDUCTION MOTOR WITH DOUBLE-SIDED PRIMARY AND LONG-SECTIONED SECONDARY" according to claim 1, **characterized by** a belt conveyor that operates through motorization distributed along its linear length, eliminating the need for rotary motorization in the drum from the head of the conveyor.

5. "CONVEYOR BELT DRIVED BY LINEAR INDUCTION MOTOR WITH DOUBLE-SIDED PRIMARY AND LONG-SECTIONED SECONDARY" according to claim 1, **characterized by** a long and sectioned secondary positioned vertically as a keel installed, removably with mechanical fasteners or permanently through of adhesives, welding or vulcanization, on the internal surface of the closed circuit formed by the conveyor belt.

6. "CONVEYOR BELT DRIVED BY LINEAR INDUCTION MOTOR WITH DOUBLE-SIDED PRIMARY AND LONG-SECTIONED SECONDARY" according to claim 1, **characterized by** having load rollers and return drums being divided or having grooves (11) to allow the passage of the sheets of secondary education during its journey.

7. "CONVEYOR BELT DRIVED BY LINEAR INDUCTION MOTOR WITH DOUBLE-SIDED PRIMARY AND LONG-SECTIONED SECONDARY" according to claim 1 and 2, **characterized by** a conveyor of multiple linear electric motors capable of dynamically distributing operating load between motor units to balance the transport of articles, either to improve their performance or due to the failure of one of the linear motor primary units.

8. "CONVEYOR BELT DRIVED BY LINEAR INDUCTION MOTOR WITH DOUBLE-SIDED PRIMARY AND LONG-SECTIONED SECONDARY" according to claim 1, **characterized by** having linear induction motors capable of regenerating energy on sloped terrain or in moments of speed reduction with the loaded conveyor.

9. " CONVEYOR BELT DRIVED BY LINEAR INDUCTION MOTOR WITH DOUBLE-SIDED PRIMARY AND LONG-SECTIONED SECONDARY" according to claim 1, **characterized by** having several linear induction motor units with active braking capacity through the primary drive to guarantee a wide range of operation including keeping the treadmill stationary under load.

10. "CONVEYOR BELT DRIVED BY LINEAR INDUCTION MOTOR WITH DOUBLE-SIDED PRIMARY AND LONG-SECTIONED SECONDARY" according to claim 1, **characterized by** a conveyor belt that can present curvature of paths both in the plane and vertical curves to overcome inclines and inclines.

11. "CONVEYOR BELT DRIVED BY LINEAR INDUCTION MOTOR WITH DOUBLE-SIDED PRIMARY AND LONG-SECTIONED SECONDARY" according to claim 1, **characterized by** a linear conveyor that can operate vertically commonly called a bucket conveyor/elevator.

12. " CONVEYOR BELT DRIVED BY LINEAR INDUCTION MOTOR WITH DOUBLE-SIDED PRIMARY AND LONG-SECTIONED SECONDARY" according to claim 1, **characterized by** a conveyor called a metal feeder (apron feeder) which has a belt made of metal plates and the secondary blades of according to figures 2 or 5 fixed directly to this metal plate core (also called plate feeder).

13. "CONVEYOR BELT DRIVED BY LINEAR INDUCTION MOTOR WITH DOUBLE-SIDED PRIMARY AND LONG-SECTIONED SECONDARY" according to theclaim 1 and 12, **characterized by** a metallic feeder that can have several sets of linear motors distributed both longitudinally and laterally as in figure 12.

14. " CONVEYOR BELT DRIVED BY LINEAR INDUCTION MOTOR WITH DOUBLE-SIDED PRIMARY AND LONG-SECTIONED SECONDARY" according to claim 1, **characterized by** having centralizing guide elements (6) of the secondary in relation to the primary slot, this action being an action that centralizes also the mat on its transport bed.
